# EUROPÄISCHE PATENTSCHRIFT

(11) **EP 2 695 261 B1**
(45) Veröffentlichungstag und Bekanntmachung des Hinweises auf die Patenterteilung: **11.03.2015**
(21) Anmeldenummer: 12717062.9
(22) Anmeldetag: 28.03.2012
(51) Int. Cl.: H02G 11/00

(54) **ENERGIEFÜHRUNGSVORRICHTUNG FÜR GROßE VERDREHWINKEL**
POWER CONDUCTING DEVICE FOR LARGE ANGLES OF TWIST
DISPOSITIF DE GUIDAGE D'ÉNERGIE POUR GRANDS ANGLES DE TORSION

(30) Priorität: 01.04.2011 DE 202011004776 U
(43) Veröffentlichungstag der Anmeldung: 12.02.2014
(73) Patentinhaber: Tsubaki Kabelschlepp GmbH, 57482 Wenden-Gerlingen (DE)
(72) Erfinder: SPIES, Jonathan, 57258 Freudenberg (DE)
(74) Vertreter: Neumann, Ditmar
(86) Internationale Anmeldenummer: PCT/EP2012/055513
(87) Internationale Veröffentlichungsnummer: WO 2012/130883

(56) Entgegenhaltungen:
- DE-A1-102007 038 567
- DE-U1-202005 001 651
- JP-A- 2009 044 809

## Beschreibung

Der Gegenstand der Erfindung bezieht sich auf eine Energieführungsvorrichtung umfassend wenigstens eine erste Leitungsführungseinrichtung und einen ersten Führungskanal, in dem die erste Leitungsführungseinrichtung angeordnet ist.

Zum Führen von Leitungen, Schläuchen oder dergleichen zwischen einem ortsfesten und einem beweglichen Anschlusspunkt sind Leitungsführungseinrichtungen bekannt. Solche Leitungsführungseinrichtungen werden auch als Energieführungseinheiten oder Energieführungsketten bezeichnet. Die Leitungsführungseinrichtungen werden in verschiedenen Apparaten, Maschinen und Einrichtungen eingesetzt, insbesondere dort, wo erforderlich ist, Verbrauchsmittel, Energie oder dergleichen mittels Leitungen, Schläuchen oder dergleichen von einem ortsfesten Anschluss zu einem beweglichen Anschluss eines Verbrauchers zu transportierten. Die Leitungsführungseinrichtung kann ein- oder mehrsträngig sein.

Die Leitungsführungseinrichtung weist ein erstes Endglied und ein zweites Endglied auf. Zwischen den Endgliedern und mit diesen verbunden ist ein auslenkbarer Abschnitt. Der Abschnitt kann durch Kettenglieder gebildet sein, die einen Kanal zur Aufnahme von Leitungen, Schläuchen oder dergleichen bilden. Ein Kettenglied kann zwei im Wesentlichen parallel zueinander angeordnete Laschen aufweisen, die durch wenigstens einen Quersteg miteinander verbunden sind.

Leitungsführungseinrichtungen werden derart angeordnet, dass diese einen Untertrum, einen Krümmungsabschnitt und einen Obertrum aufweist. Es sind auch Anordnungen bekannt, bei denen die Leitungsführungseinrichtung um 90° gedreht ist, so dass die Energieführungsvorrichtung im Wesentlichen eine kreisförmige Bewegung ausführen kann. Wird die Leitungsführungseinrichtung mit einem Krümmungsradius und einem rückwärtigen Krümmungsradius ausgestattet, so kann die Leitungsführungseinrichtung in zwei bogenförmige Richtungen bewegt werden. Bei einer solchen Anordnung ist es bekannt, dass die Leitungsführungseinrichtung in einem Führungskanal angeordnet wird. Das eine Endglied der Leitungsführungseinrichtung wird am Innenring des Führungskanals befestigt. Das andere Endglied der Leitungsführungseinrichtung wird am Außenring des Führungskanals angeordnet. Einer der Ringe ist drehbar und bildet mit dem Endglied einen Mitnehmeranschluss.

Durch Drehen des Rings legt sich die Leitungsführungseinrichtung am Innenumfang des Außenrings bzw. am Außenumfang des Innenrings ab. Hierdurch können unterschiedliche Verdrehwinkel realisiert werden.

Es sind auch Ausführungen bekannt, bei denen zwei Leitungsführungseinrichtungen gegenläufig angeordnet werden, wodurch größere Drehwinkel realisiert werden können.

In Abhängigkeit von dem Verhältnis des Durchmessers des Außenrings zum Durchmesser des Innenrings sowie der Geometrie der Energieführungskette können relativ große Verdrehwinkel realisiert werden. Hierzu ist jedoch ein nicht unerheblicher Platzbedarf notwendig.

DE 102007038567 offenbart eine Energieführungsvorrichtung nach dem Oberbegriff des Anspruchs 1.

Hiervon ausgehend liegt der vorliegenden Erfindung die Zielsetzung zugrunde, eine Energieführungsvorrichtung bereitzustellen, die auch bei relativ großen Verdrehwinkeln eine kompakte Bauweise aufweist.

Diese Aufgabe wird erfindungsgemäß durch eine Energieführungsvorrichtung mit den Merkmalen des Anspruchs 1 gelöst. Vorteilhafte Weiterbildungen und Ausgestaltungen der erfindungsgemäßen Energieführungsvorrichtung sind Gegenstand der Unteransprüche.

Die erfindungsgemäße Energieführungsvorrichtung weist wenigstens eine erste Leitungsführungseinrichtung zum Führen von Leitungen, Schläuchen oder dergleichen zwischen einem ortsfesten und einem beweglichen Anschlusspunkt auf. Die Leitungsführungseinrichtung ist gebildet durch ein erstes Endglied und ein zweites Endglied und einen zwischen den Endgliedern und mit diesen verbundenen auslenkbaren Abschnitt. Die Leitungsführungseinrichtung bildet einen Kanal zur Aufnahme von Leitungen, Schläuchen oder dergleichen. Die Energieführungsvorrichtung umfasst des Weiteren einen ersten Führungskanal, der durch einen ersten Innenring und einen ersten Außenring gebildet ist. Die erste Leitungsführungseinrichtung ist in dem ersten Führungskanal angeordnet. Das erste Endglied ist mit dem ersten Innenring und das zweite Endglied ist mit dem ersten Außenring verbunden.

Die erfindungsgemäße Energieführungsvorrichtung zeichnet sich dadurch aus, dass wenigstens ein zweiter Führungskanal, der durch einen zweiten Innenring und einen zweiten Außenring gebildet ist, vorgesehen ist. Der erste und der wenigstens eine zweite Führungskanal sind übereinander angeordnet und relativ zueinander um eine gemeinsame Achse verdrehbar. Durch diesen Aufbau der erfindungsgemäßen Energieführungsvorrichtung wird eine kompakte Bauweise der Energieführungsvorrichtung erzielt.

In dem wenigstens einen zweiten Führungskanal ist wenigstens eine zweite Leitungsführungseinrichtung angeordnet, wobei die zweite Leitungsführungseinrichtung ein erstes Anschlussglied und ein zweites Anschlussglied und eine zwischen den Anschlussgliedern und mit diesem verbundenen auslenkbaren Abschnitt aufweist. Das erste Anschlussglied ist mit dem zweiten Innenring und das zweite Anschlussglied ist mit dem zweiten Außenring verbunden.

Durch diese erfindungsgemäße Ausgestaltung der Energieführungsvorrichtung wird neben einer kompakten Aufbauweise der Energieführungsvorrichtung auch die Möglichkeit geschaffen, große Verdrehwinkel zu erreichen. Die Energieführungsvorrichtung kann mehrere übereinander angeordnete Führungskanäle aufweisen, in denen jeweils wenigstens eine Leitungsführungseinrichtung vorgesehen ist.

Sind lediglich zwei Führungskanäle vorgesehen, so ist es vorteilhaft, wenn der erste Führungskanal verdrehbar und der zweite Führungskanal ortsfest sind. Der zweite Führungskanal kann mit einem entsprechenden Montagegestell am Boden oder dergleichen verbunden sein.

Gemäß einer vorteilhaften Ausgestaltung der erfindungsgemäßen Energieführungsvorrichtung wird vorgeschlagen, dass eine Kopplungseinheit vorgesehen ist, so dass zwei benachbarte Führungskanäle miteinander gekoppelt werden. Die Kopplungseinheit ist so ausgebildet, dass beim Erreichen einer ersten Endposition die verdrehbaren Innen- oder Außenringe benachbarter Führungskanäle gekoppelt werden. In einer zweiten Endposition, die in Abhängigkeit vom Verschwenkwinkel erreicht wird, werden die verdrehbaren Innenringe oder Außenringe entkoppelt.

Ist die erfindungsgemäße Energieführungsvorrichtung so ausgebildet, dass diese zwei übereinander angeordnete Führungskanäle aufweist, so ist vorzugsweise der erste Führungskanal verdrehbar und der zweite Führungskanal ortsfest angeordnet. Ist der Innenring des ersten Führungskanals verdrehbar, so kann dieser im Betrieb bis zum Erreichen einer ersten Endposition verdreht werden. Während dieses Verdrehvorgangs bewegt sich die im ersten Führungskanal angeordnete Leitungsführungseinrichtung. Wird die erste Endposition erreicht, so findet eine Kopplung des ersten Innenrings mit dem zweiten Innenring des zweiten Führungskanals statt. Bei einer weiteren Bewegung bzw. Verdrehung wird der gesamte erste Führungskanal mit der ersten Leitungsführungseinrichtung verdreht. Gleichzeitig wird der zweite Innenring des zweiten Führungskanals verdreht und es erfolgt eine Bewegung der zweiten, im zweiten Führungskanal angeordneten Leitungsführungseinrichtung bis zum Erreichen des zweiten Endpunkts.

Wird ein Mitnehmer aus dem zweiten Endpunkt bis zum ersten Endpunkt zurückbewegt, so erfolgt zunächst eine Bewegung der zweiten Leitungsführungseinrichtung und ein Verdrehen des ersten Führungskanals bis zum Erreichen der ersten Endposition, in der der erste Führungskanal und der zweite Führungskanal entkoppelt werden. Bei einer weiteren Verdrehung des Mitnehmers bzw. des ersten Innenrings erfolgt eine Bewegung der Leitungsführungseinrichtung im ersten Führungskanal.

Mittels reibungsvermindernder Elemente soll eine möglichst reibungsfreie Bewegung ermöglicht werden, insbesondere sind zwischen dem ersten und dem zweiten Führungskanal Gleiter oder Rollen angeordnet. Die Elemente, insbesondere Gleiter oder Rollen sind mit dem ersten und/oder dem zweiten Führungskanal verbunden.

Gemäß einer noch weiteren vorteilhaften Ausgestaltung der Energieführungsvorrichtung wird vorgeschlagen, dass der zweite Führungskanal eine Deckwand aufweist, auf denen die Gleiter oder Rollen bewegbar sind.

Zur Stabilität und zur Vereinfachung der Bewegung wird vorgeschlagen, dass die erfindungsgemäße Energieführungsvorrichtung so ausgebildet ist, dass der zweite und der erste Führungskanal geführt werden.

Zu einer noch weiteren Verbesserung der Abwicklung bzw. Bewegung der ersten und/oder zweiten Leitungsführungseinrichtung wird vorgeschlagen, dass wenigstens einer der Führungskanäle eine bewegliche Führungseinrichtung, insbesondere einen Führungswagen aufweist.

Weitere Vorteile und Eigenschaften der erfindungsgemäßen Energieführungsvorrichtung werden anhand des in der Zeichnung dargestellten Ausführungsbeispiels erläutert, ohne dass der Gegenstand der Erfindung auf dieses konkrete Ausführungsbeispiel beschränkt ist. Es zeigen:
- Fig. 1:: eine Energieführungsvorrichtung im Schnitt,
- Fig. 2:: die Energieführungsvorrichtung nach Fig. 1 in einer Draufsicht, und
- Fig. 3a bis 3h:: Momentaufnahmen in Abhängigkeit vom Verdrehwinkel.

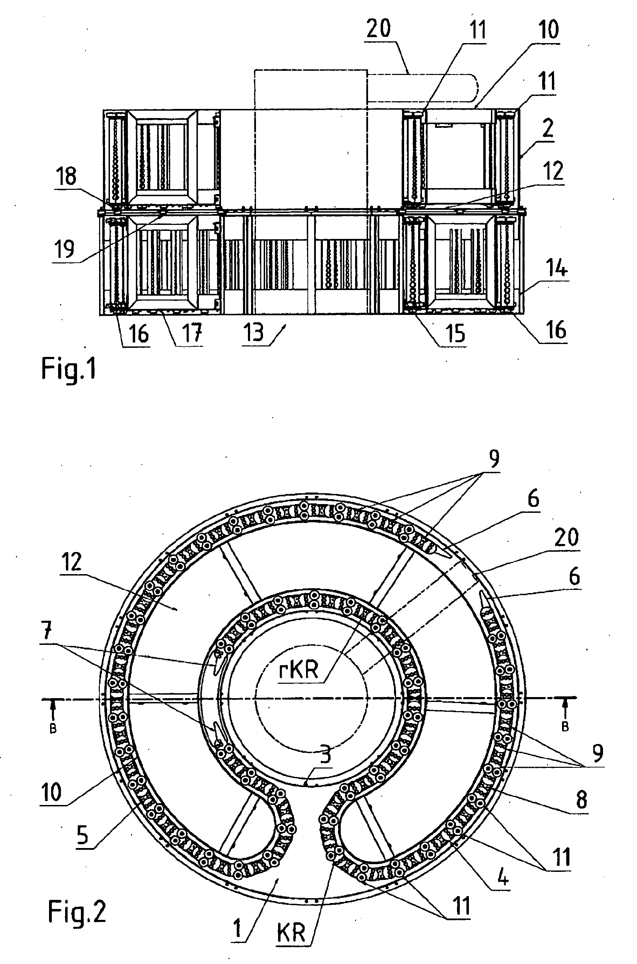

Fig. 1 zeigt ein bevorzugtes Ausführungsbeispiel der erfindungsgemäßen Energieführungsvorrichtung in einer Schnittdarstellung. Eine Draufsicht auf die erfindungsgemäße Energieführungsvorrichtung ist in der Fig. 2 dargestellt. Die Energieführungsvorrichtung weist einen ersten Führungskanal 1 auf. Der erste Führungskanal 1 ist gebildet durch einen ersten Außenring 2. Der Außenring 2 kann durch eine Wand gebildet sein. Es besteht auch die Möglichkeit, dass der erste Außenring durch eine Gitterstruktur gebildet ist.

Der erste Führungskanal 1 ist begrenzt durch einen ersten Innenring 3. In dem ringförmigen ersten Führungskanal 1 sind in dem dargestellten Ausführungsbeispiel zwei erste Leitungsführungseinrichtungen 4, 5 angeordnet. Die ersten Leitungsführungseinrichtungen 4, 5 sind gegenläufig angeordnet. Die Anordnung der zwei ersten Leitungsführungseinrichtungen ist nicht zwingend notwendig. Es besteht auch die Möglichkeit, dass in dem ersten Führungskanal 1 lediglich eine erste Leitungsführungseinrichtung 4 vorgesehen ist. Die ersten Leitungsführungseinrichtungen 4, 5 weisen jeweils ein erstes Endglied 6 und ein zweites Endglied 7 auf. Zwischen den Endgliedern 6, 7 ist ein auslenkbarer Abschnitt 8 vorgesehen, der in dem dargestellten Ausführungsbeispiel durch Glieder 9 gebildet ist.

Die ersten Endglieder 6 sind mit dem ersten Außenring 2 verbunden. Die zweiten Endglieder 7 sind mit dem ersten Innenring 3 verbunden.

Zwischen den ersten Leitungsführungseinrichtungen 4, 5 ist ein Führungswagen 10 angeordnet, der im Wesentlichen nierenförmig ausgebildet ist. Durch den Führungswagen 10 werden die ersten Leitungsführungseinrichtungen 4, 5 am ersten Außenring 2 bzw. am ersten Innenring 3 positioniert, so dass eine Stabilisierung der ersten Leitungsführungseinrichtungen 4, 5 erreicht wird.

Jede erste Leitungsführungseinrichtung 4,5 weist einen Krümmungsradius KR und einen rückwärtigen Krümmungsradius rKR auf. Durch die Kombination Krümmungsradius KR und rückwärtiger Krümmungsradius rKR bewegen sich die ersten Leitungsführungseinrichtungen 4, 5 in zwei kreisförmige Richtungen.

Aus den Darstellungen nach Fig. 1 und nach Fig. 2 ist ersichtlich, dass an ausgewählten Gliedern 9 Rollen 11 angeordnet sind. Die Rollen 11 sind an der Außen- und Innenseite des oberen Bandes der Glieder angeordnet, so dass bei Bewegung der Leitungsführungseinrichtungen diese den Rollen 11 an der Innenseite des Außenrings 2 und der Außenseite des Führungswagens 10 sowie an der Außenseite des Innenrings 3 und der Innenseite des Führungswagens liegen. Hierdurch wird eine Reibung der Leitungsführungseinrichtungen an dem Außenring, dem Innenring und dem Führungswagen, der verfahrbar ist, reduziert.

An dem unteren Kettenband, das durch die Seitenlaschen der Glieder 9 gebildet ist, der ersten Leitungsführungseinrichtungen 4, 5 sind Gleiter, Rollen oder dergleichen vorgesehen, so dass die ersten Leitungsführungseinrichtungen 4, 5 auf den Boden 12 gleiten können.

Unterhalb des ersten Führungskanals 1 ist ein zweiter Führungskanal 2 vorgesehen, der entsprechend dem ersten Führungskanal 1 ausgebildet ist.

Der zweite Führungskanal 13 weist einen zweiten Außenring 14 und einen zweiten Innenring 15 auf. Innerhalb des zweiten Führungskanals 13 sind zwei gegenläufig angeordnete zweite Leitungsführungseinrichtungen 16 vorgesehen. Ferner weist der zweite Führungskanal 13 einen Führungswagen 17 auf.

Der erste Führungskanal 1 und der zweite Führungskanal 13 sind relativ zueinander um eine gemeinsame Achse verdrehbar. Hierzu sind entsprechende Rollen 19 vorgesehen. Die Rollen 19 sind am zweiten Führungskanal angeordnet, so dass der Boden 12 des ersten Führungskanals 1 auf den Rollen 19 aufliegt. Ferner sind radial auswärts angeordnete Rollen 18 vorgesehen, so dass der erste Außenring des ersten Führungskanals 1 an diesen Rollen 19 vorbeigedreht werden kann.

Gestrichelt ist in den Fig. 1 und 2 ein Mitnehmer 20 dargestellt. Die Fig. 2 zeigt die Stellung des Mitnehmers 20 in einer ersten Position.

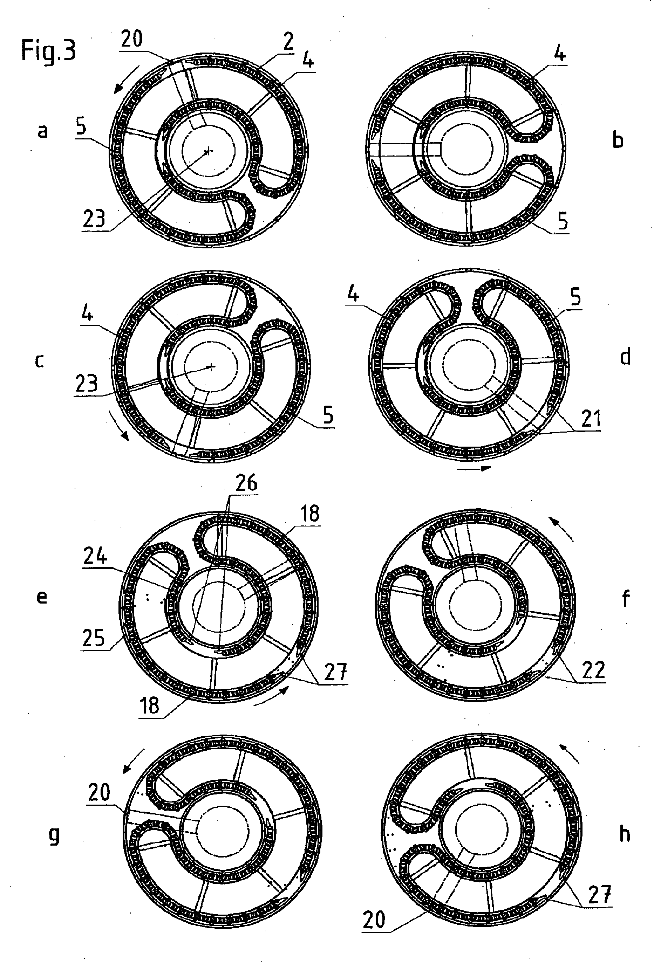

Die Fig. 3a bis 3b zeigen Momentaufnahmen der Stellungen der ersten Leitungsführungseinrichtungen 4, 5, wenn der erste Außenring 2 verdreht wird.

Der Mitnehmer 20 wird mit dem ersten Außenring 2 in Pfeilrichtung gegen den Uhrzeigersinn verdreht. Durch das Verdrehen des Mitnehmers 20 sowie des Außenrings 2 verändert sich die Position der am ersten Außenring 2 befestigten ersten Endglieder 6. Mit dem Bezugszeichen 21 ist der bewegliche Anschlusspunkt bezeichnet.

Wird der Mitnehmer 20 ausgehend von der in der Fig. 2 dargestellten ersten Endposition in die Fig. 3d dargestellte Position überführt, so findet eine Kopplung des ersten Außenrings 2 mit dem ersten Innenring 3 statt, so dass bei einem weiteren Verdrehen des Mitnehmers 20 der gesamte erste Führungskanal 1 um die Achse 23 verdreht wird. Der Mitnehmer 20 und/oder der erste Führungskanal 1 werden mit dem zweiten Innenring 24 verbunden. Mit dem zweiten Innenring 24 sind die ersten Anschlussglieder 26 der zweiten Leitungsführungseinrichtungen 18 verbunden. Der zweite Außenring 25 des zweiten Führungskanals 27 ist ortsfest. Wird der Mitnehmer 20 weiter gegen den Uhrzeigersinn verdreht, so nehmen die zweiten Leitungsführungseinrichtungen 18, die in den Fig. 3e bis 3h dargestellten Positionen ein. Bei dieser Verdrehung wird der zweite Innenring 24 sowie der auf dem zweiten Führungskanal angeordnete erste Führungskanal 1 synchron verdreht, da der zweite Innenring 24 und der erste Führungskanal 1 miteinander gekoppelt sind. Die am zweiten Außenring 25 angeordneten zweiten Anschlussglieder 27 sind ortsfest und bilden und einen ortsfesten Anschlusspunkt 22.

Durch diese Ausgestaltung der Energieführungsvorrichtung sind Verdrehwinkel größer als 360° möglich. Die in den Fig. 1 bis 3 dargestellte Energieführungsvorrichtung ermöglicht einen Verdrehwinkel von bis zu 560°.

Durch zusätzliche Anordnung eines weiteren zweiten Führungskanals können auch größere Drehwinkel realisiert werden, ohne dass der Durchmesser der Führungskanäle steigen muss. Es wird eine kompakte Bauweise der Energieführungsvorrichtung erreicht.

Wird der Mitnehmer 20 aus seiner in der Fig. 3h dargestellten zweiten Endposition in die in der Fig. 2 dargestellte erste Endposition verdreht, so werden zunächst die zweiten Leitungsführungseinrichtungen 18 mit dem zweiten Innenring und der erste Führungskanal 1 bis zu der in der Fig. 3b dargestellten Position verdreht. Beim Erreichen des maximal möglichen Verdrehwinkels der zweiten Leitungsführungseinrichtungen findet eine Entkopplung des ersten Außenrings vom ersten Irinenring statt.

Der ortsfeste Anschlusspunkt 22 ist in dem dargestellten Ausführungsbeispiel am zweiten Außenring vorgesehen, während der bewegliche Anschlusspunkt 21 am ersten Außenring angeordnet ist. Es besteht auch die Möglichkeit, dass der ortsfeste Anschluss am Innenring und der ortsbewegliche Anschlusspunkt auch am Innenring des ersten bzw. des zweiten Führungskanals positioniert sind. Statt der Bewegung des ersten Außenrings erfolgt dann eine Bewegung des ersten Innenrings sowie eine Bewegung des zweiten Außenrings.

### Bezugszeichenliste

- 1: erster Führungskanal
- 2: erster Außenring
- 3: erster Innenring
- 4, 5: erste Leitungsführungseinrichtung
- 6: erstes Endglied
- 7: zweites Endglied
- 8: Abschnitt
- 9: Glieder
- 10: Führungswagen
- 11: Rollen
- 12: Boden
- 13: zweiter Führungskanal
- 14: zweiter Außenring
- 15: zweiter Innenring
- 16: zweite Leitungsführungseinrichtung
- 17: Führungswagen
- 18: Rollen
- 19: Rollen
- 20: Mitnehmer
- 21: beweglicher Anschluss
- 22: ortsfester Anschluss
- 23: Achse
- 24: zweiter Innenring
- 25: zweiter Außenring
- 26: erstes Anschlussglied
- 27: zweites Anschlussglied

## Patentansprüche

1. Energieführungsvorrichtung umfassend
wenigstens eine erste Leitungsführungseinrichtung (4, 5) zum Führen von Leitungen, Schläuchen oder dergleichen zwischen einem ortsfesten und einem beweglichen Anschlusspunkt (21), wobei die Leitungsführungseinrichtung (4, 5), ein erstes Endglied (7) und ein zweites Endglied (6) und einen zwischen den Endgliedern (6, 7) und mit diesen verbundenen auslenkbaren Abschnitt (8) aufweist, die einen Kanal zur Aufnahme von Leitungen, Schläuchen oder dergleichen bilden,
einen ersten Führungskanal (1), der durch einen ersten Innenring (3) und einen ersten Außenring (2) gebildet ist, wenigstens einen zweiten Führungskanal (13), der durch einen zweiten Innenring (15) und einen zweiten Außenring (14) gebildet ist, vorgesehen, wobei der erste und der wenigstens eine zweite Führungskanal (1, 13) übereinander angeordnet und relativ zueinander um eine gemeinsame Achse (23) verdrehbar sind; **dadurch gekennzeichnet, daß** die erste Leitungsführungseinrichtung (4, 5) in dem ersten Führungskanal (1) angeordnet und das erste Endglied (7) mit dem ersten Innenring (3) und das zweite Endglied (6) mit dem ersten Außenring (2) verbunden sind,
in dem wenigstens einem zweiten Führungskanal (13) wenigstens eine zweite Leitungsführungseinrichtung (16) angeordnet ist, wobei die zweite Leitungsführungseinrichtung (16), ein erstes Anschlussglied (26) und ein zweites Anschlussglied (27) und einen zwischen den Anschlussgliedern (26, 27) und mit diesen verbundenen auslenkbaren Abschnitt aufweist, und
dass das erste Anschlussglied (26) mit dem zweiten Innenring (24) und das zweite Anschlussglied (27) mit dem zweiten Außenring (25) verbunden sind.

2. Energieführungsvorrichtung nach Anspruch 1, **dadurch gekennzeichnet, dass** der erste Führungskanal (1) verdrehbar und der zweite Führungskanal (13) ortsfest sind.

3. Energieführungsvorrichtung nach Anspruch 1 oder 2, **dadurch gekennzeichnet, dass** eine Kopplungseinheit vorgesehen ist, mittels derer zwei benachbarte Führungskanäle (1, 13) koppelbar sind.

4. Energieführungsvorrichtung nach Anspruch 1, 2 oder 3, **dadurch gekennzeichnet, dass** zwischen dem ersten und dem zweiten Führungskanal (1, 13) reibungsvermindernde Elemente, insbesondere Gleiter oder Rollen (18, 19) angeordnet sind.

5. Energieführungsvorrichtung nach Anspruch 4, **dadurch gekennzeichnet, dass** die Elemente, insbesondere die Gleiter oder Rollen (18, 19) mit dem ersten und/oder dem zweiten Führungskanal (1, 13) verbinden sind.

6. Energieführungsvorrichtung nach Anspruch 4 oder 5, **dadurch gekennzeichnet, dass** der erste Führungskanal (1) einen Boden (12) und/oder der zweite Führungskanal (13) eine Deckwand aufweist.

7. Energieführungsvorrichtung nach einem der Ansprüche 1 bis 6, **dadurch gekennzeichnet, dass** der erste und zweite Führungskanal (1, 13) geführt werden.

8. Energieführungsvorrichtung nach einem der Ansprüche 1 bis 7, **dadurch gekennzeichnet, dass** wenigstens einer der Führungskanäle (1, 13) eine bewegliche Führungseinrichtung, insbesondere einen Führungswagen (10) aufweist.

## Claims

1. A power conducting device comprising
- at least one first line guiding device (4, 5) for guiding lines, hoses or the like between a stationary connection point and a moving connection point (21), wherein the line guiding device (4, 5), comprises a first end link (7) and a second end link (6) and a section (8) that can be deflected between the end links (6, 7) and is connected thereto, which embody a channel for receiving lines, hoses or the like,
a first guiding channel (1), which is embodied by way of a first inner ring (3) and a first outer ring (2),
at least one second guiding channel (13, which is embodied by way of a second inner ring (15) and a second outer ring (14), wherein
- the first and the at least one second guiding channel (1, 13) are arranged one on top of the other and can be rotated relative to one another about a common axis (23),
**characterized in that**, the first line guiding device (4, 5) is arranged in the first guiding channel (1) and the first end link (7) is connected to the first inner ring (3) and the second end link (6) is connected to the first outer ring (2), at least one second line guiding device (16) is arranged in the at least one second guiding channel (13), the second line guiding device (16) comprises a first connection link (26) and a second connection link (27) and a section that can be deflected between the connection links (26, 27) and is connected thereto, and
- that the first connection link (26) is connected to the second inner ring (24) and the second connection link (27) is connected to the second outer ring (25).

2. The power conducting device as claimed in claim 1, **characterized in that** the first guiding channel (1) can be rotated and the second guiding channel (13) is stationary.

3. The power conducting device as claimed in claims 1 or 2, **characterized in that** a coupling unit is provided, by means of which two adjacent guiding channels (1, 13) can be coupled.

4. The power conducting device as claimed in claim 1, 2 or 3, **characterized in that** friction-reducing elements, in particular sliders or rollers (18, 19), are arranged between the first and the second guiding channel (1, 13), .

5. The power conducting device as claimed in claim 4, **characterized in that** the elements, in particular the sliders or rollers (18, 19), are connected to the first and/or the second guiding channel (1, 13).

6. The power conducting device as claimed in claim 4 or 5, **characterized in that** the first guiding channel (1) comprises a base (12) and/or the second guiding channel (13) comprises a covering wall.

7. The power conducting device as claimed in any one of claims 1 to 6, **characterized in that** the first and second guiding channel (1, 13) are guided.

8. The power conducting device as claimed in any one of claims 1 to 7, **characterized in that** at least one of the guiding channels (1, 13) comprises a moving guiding device, in particular a guiding carriage (10).

## Revendications

1. Dispositif de guidage d'énergie comprenant
au moins un premier dispositif de guidage de conduite (4, 5) pour guider des conduites, des tuyaux souples ou similaires entre un point de raccordement fixe et un point de raccordement mobile (21), le dispositif de guidage de conduite (4, 5) présentant un premier organe d'extrémité (7) et un deuxième organe d'extrémité (6) et une portion (8) pouvant être déviée entre les organes d'extrémité (6, 7) et connectée à ceux-ci, lesquels forment un canal pour recevoir des conduites, des tuyaux souples ou similaires,
un premier canal de guidage (1) qui est formé par une première bague interne (3) et une première bague externe (2), au moins un deuxième canal de guidage (13) qui est formé par une deuxième bague interne (15) et une deuxième bague externe (14), le premier et l'au moins un deuxième canal de guidage (1, 13) étant disposés l'un au-dessus de l'autre et pouvant tourner l'un par rapport à l'autre autour d'un axe commun (23), **caractérisé en ce que** le premier dispositif de guidage de conduite (4, 5) est disposé dans le premier canal de guidage (1) et le premier organe d'extrémité (7) est connecté à la première bague interne (3) et le deuxième organe d'extrémité (6) est connecté à la première bague externe (2), au moins un deuxième dispositif de guidage de conduite (16) est disposé dans l'au moins un deuxième canal de guidage (13), le deuxième dispositif de guidage de conduite (16) présentant un premier organe de raccordement (26) et un deuxième organe de raccordement (27) et une portion pouvant être déviée entre les organes de raccordement (26, 27) et connectée à ceux-ci, et **en ce que** le premier organe de raccordement (26) est connecté à la deuxième bague interne (24) et le deuxième organe de raccordement (27) est connecté à la deuxième bague externe (25).

2. Dispositif de guidage d'énergie selon la revendication 1, **caractérisé en ce que** le premier canal de guidage (1) est rotatif et le deuxième canal de guidage (13) est fixe.

3. Dispositif de guidage d'énergie selon la revendication 1 ou 2, **caractérisé en ce qu'**une unité d'accouplement est prévue, au moyen de laquelle deux canaux de guidage adjacents (1, 13) peuvent être accouplés.

4. Dispositif de guidage d'énergie selon la revendication 1, 2 ou 3, **caractérisé en ce qu'**entre le premier et le deuxième canal de guidage (1, 13) sont disposés des éléments réduisant les frottements, en particulier des coulisseaux ou des rouleaux (18, 19).

5. Dispositif de guidage d'énergie selon la revendication 4, **caractérisé en ce que** les éléments, en particulier les coulisseaux ou les rouleaux (18, 19), sont connectés au premier et/ou au deuxième canal de guidage (1, 13).

6. Dispositif de guidage d'énergie selon la revendication 4 ou 5, **caractérisé en ce que** le premier canal de guidage (1) présente un fond (12) et/ou le deuxième canal de guidage (13) présente une paroi de recouvrement.

7. Dispositif de guidage d'énergie selon l'une quelconque des revendications 1 à 6, **caractérisé en ce que** le premier et le deuxième canal de guidage (1, 13) sont guidés.

8. Dispositif de guidage d'énergie selon l'une quelconque des revendications 1 à 7, **caractérisé en ce qu'**au moins l'un des canaux de guidage (1, 13) présente un dispositif de guidage mobile, en particulier un chariot de guidage (10).
